# FASCICULE DE BREVET EUROPEEN

(11) **EP 0 812 254 B1**
(45) Date de publication et mention de la délivrance du brevet: **17.10.2001**
(21) Numéro de dépôt: 96904918.8
(22) Date de dépôt: 29.02.1996
(51) Int. Cl.: B29C 49/42, B65G 47/84

(54) **INSTALLATION DE FABRICATION DE RECIPIENTS PAR SOUFFLAGE DE PREFORMES EN MATIERE PLASTIQUE**
VORRICHTUNG ZUM HERSTELLEN VON BEHÄLTERN DURCH BLASFORMEN VON VORFORMLINGEN AUS PLASTIK
APPARATUS FOR MAKING CONTAINERS BY BLOW-MOULDING PLASTIC PARISONS

(30) Priorité: 02.03.1995 FR 9502412
(43) Date de publication de la demande: 17.12.1997
(73) Titulaire: SIDEL S.A., 76053 Le Havre Cédex (FR)
(72) Inventeur: SANTAIS, Didier, Boîte postale 204 F-76053 Le Havre Cédex (FR); VALLES, Thierry, F-76053 Le Havre Cédex (FR)
(74) Mandataire: Siloret, Patrick
(86) Numéro de dépôt international: FR9600309
(87) Numéro de publication internationale: WO9626826

(56) Documents cités:
- WO-A-95/05933
- DE-A- 2 905 376
- DE-A- 3 529 716
- DE-A- 3 837 118
- FR-A- 2 389 580
- FR-A- 2 700 293
- GB-A- 2 004 805
- GB-A- 2 074 496
- US-A- 4 313 720
- US-A- 4 790 741

## Description

L'invention est relative à une installation de fabrication de récipients, tels que des bouteilles, des pots, ou tout autre type de corps creux, par conditionnement thermique, puis soufflage, éventuellement accompagné d'un étirage, de préformes en matière plastique qui ont préalablement subi un conditionnement thermique approprié.

Elle s'applique tout particulièrement à la fabrication de récipients en matériau thermoplastique, tel que du polyéthylènetéréphtalate (PET), du polyéthylènenaphtalate (PEN), du copolyester, un alliage ou un mélange de plusieurs matériaux.

Les installations connues de fabrication par soufflage de préformes comportent au moins: un poste de conditionnement thermique des préformes, dans lequel les préformes sont portées à une température telles qu'elles puissent ensuite être déformées par soufflage; un poste d'amenée des préformes à ce poste de conditionnement; un poste de soufflage avec des moules dont l'empreinte possède la forme extérieure finale du récipient à obtenir; et un poste de transfert des préformes entre le poste de conditionnement thermique et le poste de soufflage.

Généralement, un étirage de la préforme doit être effectué au moment du soufflage. A cet effet des moyens d'étirage, tels qu'une tige d'élongation, venant repousser le fond de la préforme de façon contrôlée à ce moment, sont associés au poste de soufflage.

L'invention s'applique indifféremment aux installations avec ou sans moyens d'étirage; en conséquence, dans la suite de la présente description, le terme soufflage s'applique indifféremment au soufflage seul ou à l'étirage-soufflage.

Dans un type connu d'installation, fabriqué par la demanderesse, le poste de soufflage a pour ossature un dispositif monté en rotation autour d'un axe de révolution vertical. Ce dispositif, appelé roue ou carrousel de soufflage, supporte au moins deux moules, avec chacun une cavité de moulage, généralement régulièrement répartis par rapport à l'axe de rotation et portés chacun par un dispositif porte moule.

Dans ce type d'installation, chaque moule est formé de deux demi-moules articulés autour d'un axe parallèle à l'axe de révolution du carrousel. Les demi-moules sont montés de sorte que les moules s'ouvrent à la façon d'un portefeuille en direction de la périphérie de la roue de soufflage.

Il est connu que ces installations permettent d'obtenir de fortes cadences de production: ainsi, avec un matériau tel que le PET, il est possible de produire, par étirage-soufflage, plus de 1000 récipients par heure et par moule. A titre indicatif, les plus grosses installations actuellement produites par la demanderesse portent 40 moules.

Dans les installations de ce type, le poste de conditionnement thermique comprend des supports, adaptés chacun pour recevoir et maintenir fermement, mais de façon amovible, une préforme, et agencés entre eux pour constituer un dispositif sans fin. Le dispositif sans fin peut être constitué soit par un autre carrousel, soit à la façon d'une chaîne sans fin tendue entre au moins deux pignons d'entraînement. Par ailleurs, de préférence, l'agencement des supports y est tel que les préformes peuvent être chauffées avec leur ouverture (encore appelée col) vers le bas, pour éviter toute déformation, par convection, de cette ouverture lors du conditionnement thermique.

De plus, de préférence encore, les installations connues sont agencées pour qu'après conditionnement thermique, les préformes soient retournées, pour se retrouver ouverture vers le haut, afin d'éviter qu'en raison de leur ramollissement elles ne se déforment sous l'effet de leur propre poids lors de leur transfert au poste de soufflage des récipients. Selon le type d'installation, le retournement a lieu dans le dispositif de conditionnement thermique ou dans le poste de transfert.

Les opérations de mise en place et de retrait de la préforme sur une tournette s'appellent respectivement vêtissage et dévêtissage, dans le langage de l'homme du métier.

Dans la demande de brevet français publiée sous le numéro FR-A-2 709 264, au nom de la demanderesse, il est mis en évidence un inconvénient majeur de ces installations : elles sont généralement bâties autour de structures mécaniques (carrousel, moteurs, porte-moules, etc) et hydrauliques dimensionnées pour permettre de réaliser des récipients qui sont de taille ou de volume important et/ou nécessitent pour leur soufflage des paramètres (pression notamment) de valeur élevée ; il s'ensuit que si, par exemple, les récipients à obtenir sont de petite taille, ces installations peuvent paraître surdimensionnées par rapport aux récipients.

Pour remédier à ces inconvénients, la demande de brevet précitée propose une installation de production de récipients par soufflage de préformes prélablement injectées, comportant au moins deux moules disposés à la périphérie d'un carrousel, dans laquelle les moules sont de type portefeuille et comprennent chacun au moins deux cavités de moulage. Ainsi, une installation initialement constituée pour la fabrication de gros récipients peut être utilisée de façon optimale pour réaliser des plus petits.

Dans cette demande, il est encore décrit que dans le poste de conditionnement thermique, le pas entre deux préformes successives est inférieur à celui entre les axes longitudinaux de deux cavités adjacentes d'un même moule.

En raison de cette différence de pas, des moyens de changement du pas des préformes sont prévus entre le dispositif d'entraînement et un moule.

Dans la demande précitée, sont évoqués divers avantages qui ne seront pas repris en détail dans la présente description (exploitation optimale des installations connues, augmentation notable des cadences de production, compacité du dispositif de conditionnement thermique).

La demande précitée décrit un mode de réalisation des moyens de changement du pas à l'aide d'une roue comportant, à sa périphérie, une alternance d'échancrures (chacune en forme d'arc de cercle) fixes et mobiles de maintien des préformes dont l'action est complétée par un élément de maintien complémentaire, constitué par une portion de couronne circulaire.

Cette structure présente néanmoins l'inconvénient d'être difficilement utilisable si les moules doivent comporter plus de deux cavités ou empreintes de soufflage, en raison de la présence des échancrures fixes qui limitent les possibilités de variation de pas.

Le but de l'invention est donc de résoudre ce problème en proposant une installation perfectionnée dans laquelle, si besoin, le pas entre plus de deux préformes successives peut être modifié.

Selon l'invention, une installation de production de récipients par soufflage de préformes préalablement injectées, comportant:
- un dispositif d'entraînement et de maintien des préformes sur un cheminement le long duquel est disposé un poste de conditionnement thermique, avec des moyens pour maintenir deux préformes successives espacées d'un premier pas;
- au moins deux moules disposés à la périphérie d'un carrousel, dans laquelle les moules sont de type portefeuille et comprennent chacun au moins deux cavités de moulage et dans lesquels les axes longitudinaux de deux cavités adjacentes sont espacés d'un second pas;
- des moyens de changement du pas des préformes pour les faire passer du premier au second pas;
- des moyens de transfert d'au moins deux préformes pour les récupérer sur les moyens de changement du pas lorsqu'elles sont au second pas et les introduire dans un moule;
- est caractérisée en ce que les moyens de changement de pas comportent au moins deux organes mobiles adjacents, pourvus chacun d'un élément de maintien d'une préforme, et. agencés pour pouvoir mettre les éléments de maintien au premier pas lorsque ceux-ci sont en regard du dispositif d'entraînement, et au second lorsqu'ils sont en regard des moyens de transfert.

Cet agencement permet une action simultanée sur plus de deux préformes successives puisqu'il est possible de piloter plusieurs organes mobiles successifs, pour les faire passer du premier au second pas.

Un autre avantage de l'invention est qu'il est possible de réaliser les moyens de changement de pas à partir d'une roue ne portant que des échancrures mobiles, ce qui réduit les coûts de fabrication inhérents à l'usinage des échancrures fixes sur la pièce de fonderie constituant la roue.

De façon avantageuse, l'invention permet de plus une plus grande amplitude de variation du pas, contrairement au dispositif de la demande de brevet précitée, dans lequel l'amplitude de variation de pas est limitée en raison de la présence d'échancrures fixes de part et d'autre d'une échancrure mobile à la périphérie de la roue.

D'autres caractéristiques et avantages de l'invention apparaîtront à la lecture de la description qui suit, faite en regard des figures annexées, sur lesquelles:
- La figure 1 est un schéma de principe d'une installation conforme à l'invention;
- la figure 2 est une vue de dessus d'une partie de l'installation montrant un mode de réalisation préféré des moyens de changement de pas et de transfert des préformes dans les moules d'une part, et montrant un mode de réalisation possible du mécanisme de déchargement des récipients d'autre part;
- la figure 3 est une vue de dessus, partiellement éclatée, des moyens de changement de pas de la figure 2;
- la figure 4 est une vue partielle, en coupe 4-4 de la figure 2, d'un mode de réalisation des moyens de changement de pas;
- la figure 5 est un schéma d'implantation préféré des éléments des figures 2 à 4 dans une installation avec un dispositif de conditionnement thermique linéaire;
- la figure 6 est un schéma d'implantation possible des éléments des figures 2 à 4 dans une installation avec un dispositif de conditionnement thermique circulaire.

Suivant l'exemple d'exécution représenté sur les différentes figures, l'invention concerne une installation de fabrication de récipients, par soufflage ou étirage/soufflage de préformes 1 en matière plastique, préalablement obtenues par exemple par injection dans une machine à injecter.

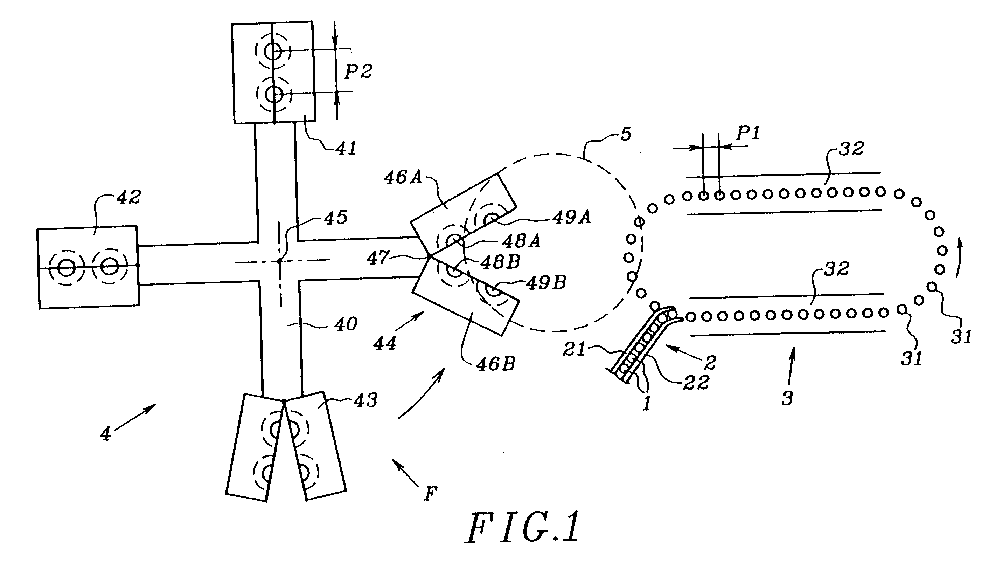

Sur la figure 1, les préformes sont amenées d'un ou plusieurs conteneurs de stockage ou de trémies (non représentés), par un dispositif d'amenée 2 tel qu'une goulotte avec des glissières 21, 22, à un dispositif de conditionnement thermique 3, tel qu'un four à rayonnement infrarouge, où elles sont chauffées pour être ramollies en vue de leur soufflage.

Le dispositif de conditionnement 3 possède une structure connue: il peut être linéaire ou circulaire et comporte d'une part un assemblage, tel qu'une chaîne sans fin, de supports 31 des préformes, régulièrement espacés d'un premier pas P1, et destinés à recevoir chacun une préforme, et d'autre part une ou plusieurs zones 32, avec des moyens de chauffage (non représentés) devant lesquels les préformes se trouvent exposées lors de la circulation des supports.

Les supports, connus en soi, ne sont pas représentés en détail. Il s'agit par exemple de tournettes avec un mandrin et une bague élastique.

Pour des raisons pratiques connues (présence d'une collerette qui lui permet d'être supportée dans les glissières précitées), de préférence les préformes sont introduites dans le dispositif de conditionnement thermique 3, et mises en place chacune sur une tournette ouverture vers le haut. L'installation comporte des moyens pour retourner les préformes afin qu'elles soient ouverture vers le bas pendant toute la durée du traitement thermique, pour éviter le ramollissement de leur col. Ces moyens sont par exemple constitués par un dispositif de retournement connu, disposé dans le trajet de la chaîne sans fin, tel que celui décrit dans le brevet français numéro 8905885 au nom de la demanderesse. Par ailleurs, de préférence encore, les préformes sont remises ouverture vers le haut entre la sortie du poste de conditionnement thermique et le poste de soufflage du récipient. A cet effet, un autre dispositif de retournement est disposé entre le dernier élément chauffant rencontré dans le dispositif de conditionnement thermique et le poste de soufflage. De préférence, il peut s'agir d'un dispositif disposé dans la chaîne sans fin, par exemple également celui du brevet français 8905885. En variante, il s'agit de tout autre dispositif équivalent approprié.

Après conditionnement thermique et remise ouverture vers le haut, chaque préforme est séparée de la tournette qui la porte par dévêtissage, puis transférée au poste de soufflage 4 par l'intermédiaire d'un dispositif interface 5 qui sera détaillé plus après. Après soufflage, les récipients obtenus sont évacués par un dispositif approprié non représenté sur ce schéma de principe, et situé par exemple à l'emplacement de la flèche F.

Le poste de soufflage 4 est constitué à partir d'un carrousel 40 portant aux moins deux moules 41, 42, 43, 44, du type portefeuille, répartis autour de l'axe de rotation 45, vertical, du carrousel, et comportant chacun au moins deux cavités de soufflage.

Chaque moule 41, 42, 43, 44 est formé de deux demi-moules 46A, 46B, s'articulant pour leur ouverture et leur fermeture, à l'aide de moyens connus et non représentés, autour d'un axe 47 porté par le carrousel. A titre d'exemple, et sans que ceci soit limitatif, l'ouverture et la fermeture des moules peuvent être assurées par des moyens identiques ou équivalents à ceux décrits dans la demande de brevet français publiée sous le numéro 2 479 077 qui est incorporée ici par référence, c'est-à-dire par un mécanisme comportant un bras tourillonant dans le carrousel 40 et commandé par un galet coopérant avec une came fixe par rapport au carrousel.

Chaque demi-moule comprend autant de demi-cavités que le moule comporte de cavités. Dans l'exemple illustré où chaque moule comporte deux cavités, chaque demi-moule 46A, 46B, comprend deux demi-cavités 48A, 49A; 48B, 49B, respectivement.

De préférence, et de façon connue, quelle que soit la forme finale du récipient à obtenir, ou impérativement lorsque la forme finale interdit un démoulage aisé (fond pétaloïde par exemple), chaque moule est associé à des moyens de fermeture du fond.

Dans le dispositif de conditionnement thermique 3, les préformes sont continuellement espacées d'un premier pas P1, le pas étant défini comme étant la distance séparant l'axe longitudinal de deux préformes successives ou, ce qui revient au même, la distance séparant l'axe longitudinal des supports de deux préformes successives dans ce dispositif.

Dans le poste de soufflage 4, deux cavités successives d'un même moule sont espacées d'un second pas P2, supérieur au premier P1, et calculé pour tenir compte, d'une part de l'expansion radiale des préformes lors du soufflage, et d'autre part de la nécessité de laisser une épaisseur de matière suffisante entre deux cavités, pour que le moule ait une résistance mécanique correcte lors du soufflage. Comme évoqué auparavant, les préformes sont le plus proche possible l'une de l'autre dans le dispositif de conditionnement thermique, et donc le pas est inférieur à celui existant dans le poste de soufflage. Ainsi, le poste de conditionnement thermique a les plus petites dimensions possibles, compte tenu du débit global souhaité pour l'installation. En conséquence, le dispositif interface 5 précité comporte non seulement des moyens de transfert vers le poste de soufflage 4, mais encore des moyens pour assurer le changement du pas des préformes après leur conditionnement thermique.

A titre d'exemple, le premier pas P1 peut être de l'ordre de 50 millimètres et le second P2 peut être de l'ordre de 80 millimètres ou plus.

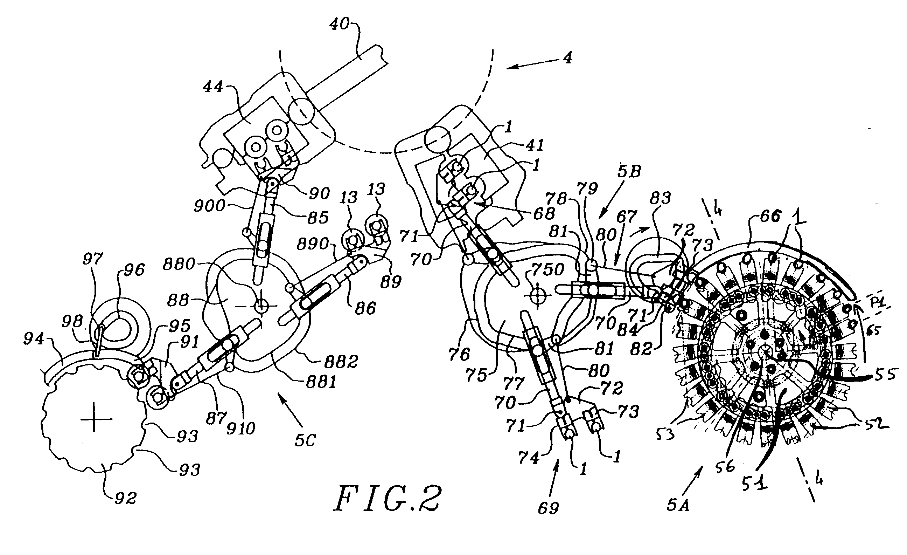

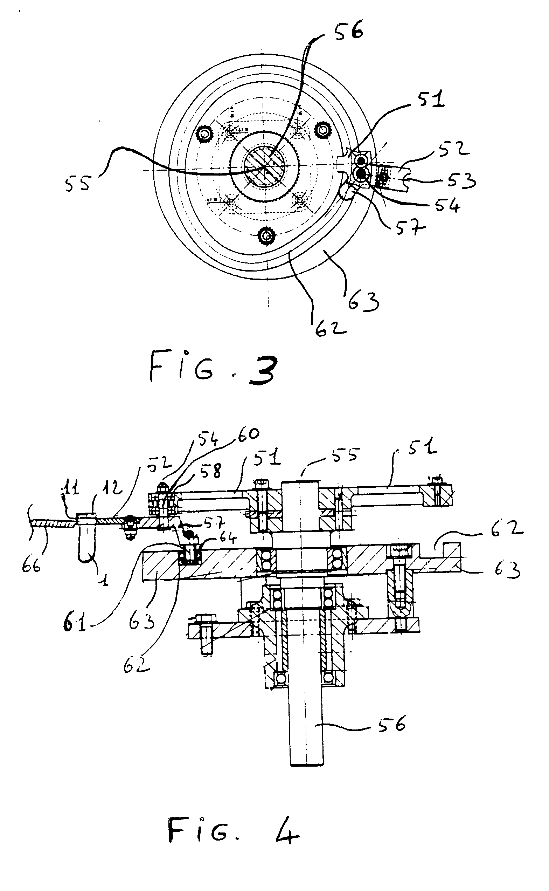

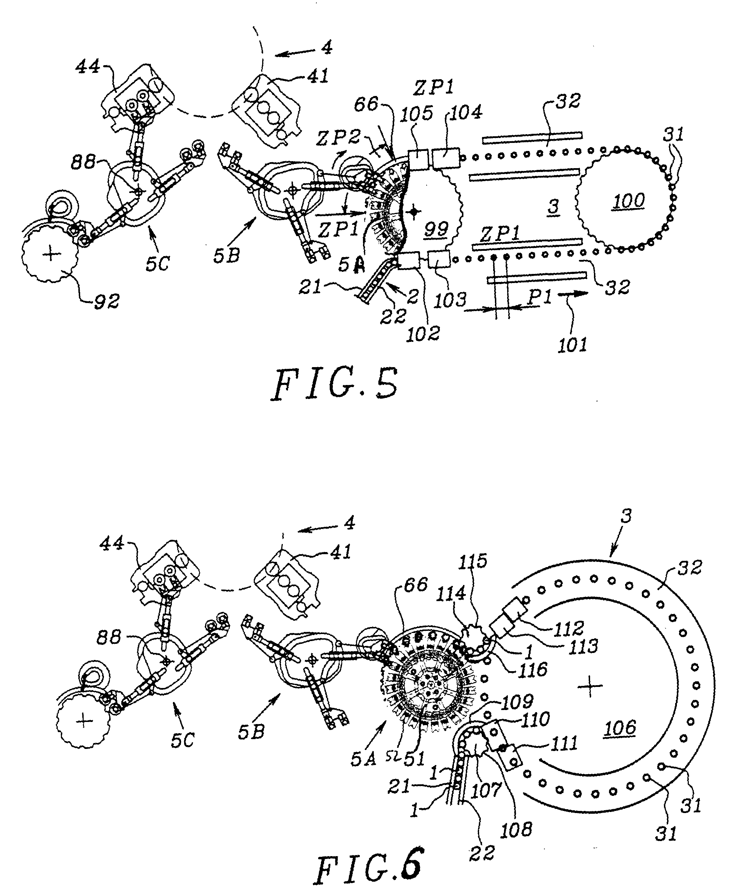

Les figures 2 et 3 illustrent une mise en oeuvre préférée du dispositif interface selon l'invention, adapté à la saisie, au changement de pas et au transfert d'au moins deux préformes.

Dans cette mise en oeuvre, le dispositif interface 5 comporte au moins deux séries de moyens complémentaires: des premiers moyens 5A de changement de pas dans lesquels les préformes arrivent au pas P1, puis sont écartées, après dévêtissage, pour passer au pas P2, et des seconds moyens 5B comprenant au moins le dispositif 67, 68, 69 pour transférer les préformes 1 vers les moules après qu'elles aient été mises au second pas P2.

Dans le mode de mise en oeuvre représenté, les premiers moyens 5A comportent d'une part une roue 51 pourvue, sur toute sa périphérie, d'organes mobiles 52, régulièrement répartis, ayant chacun un élément de maintien 53 d'une préforme et, d'autre part, un élément complémentaire 66 servant de guide qui sera décrit ultérieurement. Chaque organe mobile 52 est monté sur la roue 51 de façon telle qu'il peut se rapprocher ou s'écarter de l'organe mobile adjacent. En conséquence, l'élément de maintien 53 qu'il porte peut se rapprocher ou s'écarter de l'élément de maintien de chaque organe adjacent, ce qui provoque le changement de pas.

Les éléments de maintien sont des échancrures 53 qui assurent le maintien des préformes 1 grâce à une collerette 11 (visible sur la figure 4) située sous le col 12 de ces dernières.

Les organes mobiles 52 sont constitués par des lames identiques, par exemple de forme sensiblement rectangulaire. Une première extrémité de chaque lame est montée en rotation autour d'un axe 54 parallèle à l'axe central de rotation 55 de la roue, à proximité de la périphérie de la roue 51. L'échancrure de maintien 53 des préformes associée à une lame est réalisée à l'extrémité opposée à celle où se trouve l'axe 54 de rotation de la lame, comme le montrent les figures 2 et 3. Les axes de rotation 54 des lames sont régulièrement répartis à proximité de la périphérie de la roue 51 délimitant ainsi un cercle concentrique à l'axe de rotation 55 de la roue 51. Grâce à cette disposition, tout mouvement de rotation d'une lame autour de son axe entraîne un changement de pas entre l'élément de maintien 53 qui y est associé et l'élément de maintien de chacune des deux lames adjacentes.

Comme il sera montré après, le mouvement de rotation d'une lame est assuré par des moyens liés à la lame et à une partie fixe de l'installation, de sorte que la position angulaire d'une lame par rapport à la roue 51 dépend de la position angulaire de la roue par rapport à l'installation.

La rotation de la roue 51 autour de son axe 55, en synchronisme avec le reste de l'installation, est assurée par un arbre 56 auquel est transmis le mouvement de rotation du moteur de l'installation, non représenté, par l'intermédiaire de moyens connus en soi (courroies, pignons, ou autres) et également non représentés.

La figure 3 est une vue de dessus montrant partiellement les moyens 5A de changement de pas, en particulier une partie de la roue 51 et les moyens de commande de la rotation d'une lame par rapport à la roue.

La figure 4 est une vue en coupe partielle de la roue et d'un organe mobile qu'elle porte. Ces figures 3 et 4 illustrent comment chaque lame 52 est mise en rotation autour de son axe 54 respectif par rapport à la roue 51, lorsque cette dernière est elle-même en rotation.

Chaque lame est associée à une manivelle 57 pour assurer sa rotation et donc le changement de pas par rapport aux lames adjacentes. Une première extrémité 60 de la manivelle associée à une lame est d'une part fermement solidaire de la lame au niveau de son axe de rotation 54, d'autre part montée à libre rotation sur la roue 51 grâce à un système 58 à palier et roulement par exemple. Ainsi, tout mouvement de la manivelle entraîne une rotation de la lame par rapport à la roue 51.

La seconde extrémité 61 de la manivelle est engagée dans une came 62 de guidage, solidaire du bâti de l'installation. La came est donc fixe par rapport à l'installation. Dans le mode de réalisation illustré par les figures 3 et 4, la came 62 est constituée par une rainure réalisée dans l'épaisseur d'un plateau 63 fixe par rapport au reste de l'installation, et disposé autour de l'arbre 56 d'entraînement de la roue 51, au-dessous de, et dans un plan parallèle à, cette dernière. La rainure 62 forme une boucle fermée présentant des variations dans son rayon de courbure, de sorte que lorsque la roue 51 est mise en rotation, la seconde extrémité 61 de chaque manivelle suit les variations de la courbure de la rainure ménagée dans le plateau 63 fixe. Ainsi, chaque fois que la seconde extrémité 61 d'une manivelle rencontre un changement de courbure de la rainure, il en résulte une rotation de sa première extrémité 60, donc un mouvement de la lame 52 associée et, en conséquence, un changement de pas entre l'échancrure 53 portée par la lame 52 associée et les échancrures des deux lames adjacentes. Or, puisque toutes les lames sont fixées et articulées de la même manière sur le plateau tournant (axes de rotation portés par un cercle concentrique à l'axe du plateau et manivelles identiques), elles ont toutes une cinématique identique, mais déphasée d'une lame à l'autre. C'est donc le profil de la came qui détermine le mouvement relatif des lames l'une par rapport à l'autre. Il est donc possible que plus de deux lames successives soient au premier pas P1 ou au second P2.

De préférence, comme illustré par la figure 4, qui est une vue en coupe partielle 4-4 de la figure 2, la seconde extrémité 61 de chaque manivelle est guidée dans la came 62 par l'intermédiaire d'un galet 64, monté autour de cette extrémité.

Puisque le changement de pas ne peut avoir lieu qu'après dévêtissage, on comprend bien en observant les figures 2 à 4 que les échancrures 53 associées aux lames 52 de la roue 51, ne suffisent pas à maintenir les préformes à la périphérie de la roue. C'est pourquoi un élément de maintien complémentaire 66, constitué dans un mode de mise en oeuvre préféré par une portion de couronne circulaire, est disposé à la périphérie de la roue en regard de toute la zone où les préformes sont appelées à se déplacer, entre le moment où elles arrivent sur les échancrures et leur saisie par les seconds moyens 5B. La portion de couronne est écartée des encoches d'une distance telle que les préformes peuvent être entraînées le long de cet élément lorsque la roue 51 tourne, tout en étant supportées chacune sous leur collerette 11 entre une échancrure et cet élément 66 (figures 2 et 4).

Comme indiqué auparavant, le dispositif interface 5 comporte, en complément des moyens 5A de changement de pas , au moins des moyens 5B, avec au moins un élément de transfert 67, 68, 69 pour y saisir les préformes 1 au pas P2 et les transférer dans les moules. En conséquence, à supposer que la roue 51 tourne dans le sens illustré par la flèche 65 sur la figure 2, et que les préformes rejoignent la roue au niveau de la pointe de cette flèche, alors les manivelles 57 et la came 62 sont agencées pour que les éléments de maintien mobiles 52 soient au pas P1 à l'emplacement de la flèche, et au pas P2 au moins dans la zone où un élément de transfert (67 sur la figure 2) des moyens 5B saisit les préformes.

De préférence, en raison des cadences élevées de l'installation, les moyens 5B comprennent plusieurs éléments de transfert 67, 68, 69 identiques. Ainsi, dans le mode de réalisation illustré par la figure 2, ils comprennent trois éléments de transfert.

Chaque élément comporte un bras 70 à une première extrémité duquel est articulé en rotation, grâce à un pivot 71, un support 72 portant autant de paires de pinces 73, 74 que chaque moule du carrousel 4 comporte de cavités. Ainsi, dans le mode de réalisation illustré par la figure 2, chaque bras supporte deux paires de pinces, dont les centres sont écartés du second pas P2.

Dans une mise en oeuvre préférée, chaque pince est à ressorts et s'ouvre grâce à la force exercée par le col des préformes, au moment où une préforme y est introduite ou extraite, et se referme sous l'action des ressorts qui la lient à son support.

Dans une variante, chaque pince est à ouverture et/ou fermeture commandée par un mécanisme approprié.

Des mécanismes de fermeture à ressorts, de même que des mécanismes de commande d'ouverture et/ou de fermeture sont connus et déjà utilisés dans les installations classiques. Leur adaptation à la présente invention ne pose pas de problème à l'homme du métier. Ils ne sont donc pas représentés et décrits plus en détail.

La seconde extrémité du bras 70 est montée, en rotation et en translation, sur un support 75 tournant lui-même autour d'un axe 750 en synchronisme avec le reste de l'installation. Les mouvements de rotation et de translation de la seconde extrémité du bras sont assurés, de façon connue, par des cames fixes 76, 77 par rapport à l'installation, entraînant des galets liés au bras et guidés par ces cames.

Cet agencement est réalisé notamment pour que, lors de la saisie des préformes, le mouvement de la première extrémité du bras soit asservi à la rotation du plateau, permettant ainsi que la première extrémité et donc les pinces accompagnent le plateau sur une distance suffisante pour assurer une saisie aussi parfaite que possible.

Cet agencement est encore réalisé pour qu'un autre asservissement, entre le mouvement de la première extrémité du bras et un porte moule, ait lieu au moment du transfert des préformes dans les cavités de chaque moule, jusqu'à fermeture complète du moule, assurant un positionnement parfait des préformes dans les cavités.

De plus, la variation de longueur des bras, permise par les mouvements de rotation et de translation, permet d'optimiser l'encombrement de ces bras lors de leurs mouvements.

Cependant, étant donné que chaque bras porte au moins deux pinces, le seul asservissement du mouvement de la première extrémité du bras 70 n'est pas suffisant pour assurer la saisie des préformes 1 sur les moyens 5A de changement de pas ou le transfert correct des préformes dans les moules. C'est pourquoi, les mouvements de rotation et de translation de chaque bras sont accompagnés d'une rotation du support 72 des pinces par rapport à ce bras, permettant en permanence un positionnement correct des pinces et un accompagnement du mouvement tant du plateau lors de la saisie des préformes, que des moules pendant le transfert et leur fermeture.

Cette rotation du support 72 de chaque pince est obtenue grâce à une troisième came 78, fixe par rapport au support 75 tournant. Cette came 78 entraîne un autre galet 79, lié à une première extrémité d'une première biellette 80, dont la seconde extrémité est reliée au support 72 des pinces, et par une seconde biellette 81 reliant le galet 79 à la seconde extrémité du bras 70.

Sur la figure 2, l'un 68 des trois bras de transfert est représenté alors qu'il se trouve dans un moule 41.

Dans le mode de mise en oeuvre, illustré par la figure 2, l'extrémité de l'élément de maintien 66, complémentaire des échancrures 53 est prolongée par une partie mobile 82 s'éclipsant après que les préformes aient été saisies par les pinces. La présence de cette partie mobile 82, servant de guide facilite la cinématique de chacun des bras 67, 68, 69 en leur évitant de devoir accompagner les échancrures 53 jusqu'à ce que la dernière préforme qu'ils saisissent soit complètement dégagée de cet élément de maintien 66. Dans le mode de réalisation illustré, cette partie mobile 82 est une autre portion de couronne, montée en rotation à proximité de l'extrémité de l'élément de maintien complémentaire 66 située du côté où les bras saisissent les préformes. Lorsque les pinces reliées à un bras n'ont pas encore saisi les préformes, la partie mobile 82 prolonge l'élément complémentaire. Dès que la saisie est réalisée, la partie mobile 82 s'écarte.

Une came 83 tournant en synchronisme avec l'installation entraîne une biellette 84 reliée à la partie mobile 82. Le profil de la came est tel que la partie mobile 82 reste en position de maintien des préformes tant que la saisie n'est pas assurée, puis s'écarte après la saisie, et revient en position rapprochée jusqu'à la saisie des préformes suivantes.

Le déchargement des récipients 13, après soufflage dans les moules peut s'effectuer à l'aide d'un dispositif 5C comprenant un ou plusieurs éléments de transfert de structure similaire à ceux 67, 68, 69 servant au chargement des préformes. Chaque élément comporte un bras 85, 86, 87 montés en rotation et en translation autour d'un support unique 88 tournant lui-même autour d'un axe 880, et à chaque bras est articulé un support 89, 90, 91 respectif, avec autant de moyens de préhension, tels que des paires de pinces que chaque moule comporte de cavités. Les pinces viennent saisir les récipients 13 par leur col à la sortie des moules.

Un mécanisme à cames 881, 882, galets et biellettes 890, 900, 910 permet que le mouvement des pinces soit asservi à la rotation d'un moule pendant un cheminement nécessaire à une bonne saisie des récipients, et que les récipients soient ensuite déchargés, par exemple sur une roue 92 à encoches 93 et un support 94, en forme de portion de couronne, complémentaire de la roue à encoches.

De préférence, un organe 95, en forme de portion de couronne, prolonge le support complémentaire 94. Cet organe est relié à un mécanisme à came 96, galet 97 et biellette 98, dont la came est entraînée en synchronisme avec le reste de l'installation. L'organe 95 s'efface sous l'action du mécanisme à came 96, galet 97 et biellette 98 au moment où les pinces arrivent sur la roue à encoches et se met en place lorsqu'elles sont bien engagées, pour faciliter la prise des récipients par la roue à encoches. Les récipients entraînés par leur col entre la roue à encoches et l'organe complémentaire 93 sont alors extraits en force des pinces alors que l'élément de transfert continue sa rotation dans une direction croisée.

Sur la figure 5 apparait une implantation préférée des éléments de l'invention, lorsque le dispositif de conditionnement thermique 3 est du type linéaire, c'est-à-dire dans lequel la chaîne sans fin de tournettes 31, de structure connue, possède au moins deux secteurs linéaires en regard desquels se trouvent les zones 32 de chauffage et est tendue entre deux plateaux ou roues, un premier 99 servant à l'entraînement de cette chaîne en synchronisme avec le reste de l'installation, et un second 100 servant à la tension et au renvoi de la chaîne.

Les moyens 5A de changement de pas, constitués par la roue 51 portant les lames mobiles 52 à échancrures 53, sont disposés coaxialement au premier plateau 99 d'entraînement de la chaîne de tournettes 31, sous celui-ci, et la roue est entraînée avec ce plateau 99. Comme expliqué après, cet agencement permet que le vêtissage et/ou le dévêtissage soient effectués alors que les préformes sont en regard de la roue 51.

Sur cette figure 5, le premier plateau 99 est représenté en vue éclatée pour que la roue 51 soit au moins partiellement visible.

En supposant que le dispositif de conditionnement thermique 3 soit entraîné dans le sens illustré par la flèche 101, le dispositif d'amenée 2 dirige les préformes 1, ouverture vers le haut, sur la roue 51, dans une zone ZP1 où le pas entre les échancrures 53 est le premier pas P1, de façon que chaque échancrure, et donc chaque préforme arrivant sur la roue 51 dans cette zone ZP1, soit en regard des moyens de vêtissage, par exemple constitués par un mandrin et une bague élastique, d'une tournette.

Chaque préforme se présentant dans le dispositif d'amenée est alors happée par l'échancrure 53 d'une lame 52, puis entraînée vers une zone 102 de vêtissage avec des moyens connus, par exemple un dispositif, non représenté, à came faisant descendre dans le col des préformes le mandrin et la bague élastique associés à chaque tournette successive.

Ensuite, les préformes passent dans une zone 103 de retournement utilisant des moyens connus, pour se trouver ouverture vers le bas dans les zones de chauffage 32.

De préférence, après conditionnement thermique, avant d'arriver à nouveau sur les moyens 5A de changement de pas, les préformes sont à nouveau retournées, dans une zone 104 avec des moyens connus également, et se retrouvent fond vers le bas, avant de revenir au contact des échancrures 53 de la roue 51.

Ensuite, après s'être retrouvée - toujours dans la zone ZP1 où le pas entre les échancrures est le premier pas P1 - entre une encoche et l'élément de maintien complémentaire 66 (la portion de couronne circulaire de la figure 2), chaque préforme subit, l'une après l'autre, dans une zone 105, un dévêtissage. Chaque préforme se retrouve alors portée uniquement par son col entre une échancrure et l'élément de maintien complémentaire 66.

Le préformes pénètrent alors dans une zone ZP2 où elles sont mises au second pas P2 avant d'être saisies par les seconds moyens 5B comprenant les éléments 67, 68, 69 de transfert des préformes vers les moules.

De ce qui précède, il résulte qu'avec ce mode de réalisation, la came 62 guidant les manivelles 57 doit être profilée pour que les éléments de maintien, tels que les échancrures 53 soient au premier pas P1 au moins aux moments du vêtissage et du dévêtissage.

De plus cette came doit être profilée de façon que les éléments de maintien soient au second pas P2 au moins lorsque les pinces 73, 74 du dispositif de transfert des préformes vers les moules sont en contact avec les préformes.

Par contre, il n'est pas nécessaire mais seulement préférable que la came soit profilée pour que l'amenée des préformes se fasse dans une zone des moyens 5A de changement de pas où les échancrures sont au premier pas P1: en effet, il est tout à fait envisageable que les préformes soient amenées dans une zone où le pas est différent de ce pas P1, voire même du pas P2, la mise au premier pas P1 s'effectuant alors entre le moment où les préformes sont happées par une échancrure et celui du vêtissage.

Dans une variante, non représentée, le dispositif d'amenée 2 des préformes dirige les préformes, non pas directement sur les moyens 5A de changement de pas, mais sur une roue intermédiaire de chargement.

La figure 6 illustre une implantation possible des éléments de l'invention dans une installation dans laquelle le dispositif de conditionnement thermique est circulaire et est bâti autour d'un carrousel 106.

Les moyens de chargement, vêtissage et conditionnement sont connus. Ainsi, le dispositif d'amenée 2 dirige les préformes 1 sur une roue intermédiaire 107 à encoches 108 et sur un support complémentaire 109 en forme de portion de couronne. Chaque préforme, portée sous sa collerette par une encoche 108 et par le support 109 est dirigée vers une zone 110 de vêtissage, puis une zone de retournement 111, précédant les zones 32 de conditionnement thermique.

Après conditionnement thermique, les préformes aboutissent dans une zone 112 de retournement connue en soi, puis dans une zone de dévêtissage 113, également connue, avant d'être prises en charge par un mécanisme de transfert et de changement de pas comprenant d'une part au moins une roue intermédiaire 114 à encoches fixes 115, et un support complémentaire 116 en forme de portion de couronne, permettant que les préformes soient portées sous leur collerette par les encoches 115 et le support 116, et d'autre part les moyens 5A de changement de pas constitués par la roue 51 et ses lames 52 mobiles à échancrures 53.

Au cas où plusieurs roues 114 intermédiaires sont présentes, chacune est associée à un support 116 complémentaire, en forme de portion de couronne, distinct. Ainsi, les préformes sont supportées en permanence entre le moment de leur sortie du dispositif de conditionnement thermique et celui de leur passage sur les moyens 5A de changement de pas.

En aval des moyens 5A de changement de pas se trouvent les seconds moyens 5B avec les éléments de transfert 67, 68, 69 pour saisir les préformes 1 après qu'elles aient été mises au second pas P2 et les transférer dans les moules.

Bien entendu, l'invention n'est nullement limitée aux modes de réalisation décrits ou revendiqués, mais elle englobe leurs équivalents et toutes les variantes ou adaptations qui seraient à la portée de l'homme du métier.

## Revendications

1. installation de production de récipients (13) par soufflage de préformes (1) préalablement injectées, comportant:
- un dispositif (3) d'entraînement et de maintien des préformes sur un cheminement le long duquel est disposé un poste de conditionnement thermique (32), avec des moyens (31) pour maintenir deux préformes successives espacées d'un premier pas (P1);
- au moins deux moules (41, 42, 43, 44) disposés à la périphérie d'un carrousel de soufflage (4), dans laquelle les moules sont de type portefeuille et comprennent chacun au moins deux cavités (48A, 48B; 49A, 49B) de moulage et dans lesquels les axes longitudinaux de deux cavités adjacentes sont espacés d'un second pas (P2);
- des moyens (5A) de changement de pas des préformes pour les amener du premier (P1) au second (P2) pas;
- des premiers moyens de transfert (5B) d'au moins deux préformes pour les récupérer sur les moyens de changement de pas lorsqu'elles sont au second pas et les introduire dans un moule;
- **caractérisée en ce que** les moyens de changement de pas (5A) comportent au moins deux organes mobiles (52) adjacents, pourvus chacun d'un élément de maintien (53) d'une préforme, et agencés pour pouvoir mettre les éléments de maintien au premier pas (P1) lorsque ceux-ci sont en regard du dispositif d'entraînement, et au second (P2) lorsqu'ils sont en regard des moyens de transfert.

2. Installation selon la revendication 1, **caractérisée en ce que** le premier pas (P1) entre les axes longitudinaux de deux préformes successives dans le dispositif de conditionnement thermique est inférieur à celui (P2) entre les axes longitudinaux de deux cavités adjacentes d'un même moule.

3. Installation selon la revendication 2, **caractérisée en ce que** les moyens (5A) de changement de pas comportent une roue (51) comprenant à sa périphérie une succession d'éléments (53) de maintien des préformes.

4. Installation selon la revendication 3, **caractérisée en ce que** les éléments de maintien (53) sont des échancrures, et **en ce qu'**elle comporte, à la périphérie des échancrures, un élément de maintien complémentaire (66), constitué par une portion de couronne circulaire permettant que les préformes (1) soient portées, entre les échancrures et cet élément complémentaire, par leur collerette (11), entre le moment du dévêtissage et le moment où les préformes sont saisies par les premiers moyens de transfert (5B), après le changement de pas.

5. Installation selon la revendication 4, **caractérisée en ce que** les échancrures (53) sont régulièrement réparties à la périphérie de la roue (51).

6. Installation selon l'une des revendications 4 à 5, **caractérisée en ce que** les échancrures (53) sont réalisées dans des lames (52) identiques montées en rotation sur la roue, et **en ce qu'**elle comporte des moyens (57, 62, 63) agencés pour qu'à tout moment la position d'une lame par rapport aux lames adjacentes, et donc celle d'une échancrure par rapport aux échancrures des lames adjacentes, soient fonction de la position de la roue (51) par rapport à l'installation.

7. Installation selon la revendication 6, **caractérisée en ce que** les axes de rotation (56) de l'ensemble des lames sont régulièrement répartis sur la roue (51) et délimitent un cercle concentrique à l'axe de rotation (57) de cette roue (51).

8. Installation selon l'une des revendications 6 ou 7, **caractérisée en ce que** chaque lame (52) est associée à une manivelle (57) respective, pour assurer sa rotation par rapport à la roue et donc le changement de pas, une première extrémité (60) de la manivelle associée à une lame étant solidaire de l'axe de rotation (56) de cette lame, et une seconde extrémité (61) étant engagée dans une came (62) de guidage, solidaire du bâti de l'installation.

9. Installation selon la revendication 8, **caractérisée en ce que** la came (62) est constituée par une rainure, formant une boucle fermée, réalisée dans l'épaisseur d'un plateau (63) fixe par rapport à l'installation; la came présente des variations dans son rayon de courbure, de sorte que lorsque la roue (51) est entraînée en rotation, la seconde extrémité (61) de chaque manivelle (57) suit les variations de la courbure de la came ménagée dans le plateau fixe, entraînant la rotation de la lame associée par rapport à la roue (51), donc une variation de l'espacement de cette lame par rapport à ses voisines et, en conséquence, un changement de pas entre les échancrures des lames considérées.

10. Installation selon l'une des revendication 1 à 9, **caractérisée en ce que** les premiers moyens de transfert (5B) sont constitués par au moins un premier bras (70) dont une première extrémité porte autant de moyens de préhension de préformes, tels que des paires de pinces (73,74), qu'un moule comporte de cavités, le pas entre les centres de deux moyens de préhension successifs d'un même bras étant identique à celui (P2) entre les axes longitudinaux de deux cavités successives d'un même moule.

11. Installation selon l'une des revendications 1 à 10, **caractérisée en ce qu'**elle comporte des seconds moyens de transfert (5C) pour décharger les récipients (13) des moules.

12. Installation selon la revendication 11, **caractérisée en ce que** les seconds moyens de transfert (5C) sont constitués par au moins un second bras (85, 86, 87) dont une première extrémité porte autant de moyens de préhension de récipients (13), tels que des paires de pinces, qu'un moule comporte de cavités, le pas entre les centres de deux moyens de préhension successifs étant identique à celui (P2) entre les axes longitudinaux de deux cavités successives d'un même moule.

13. Installation selon l'une des revendications 11 ou 12, **caractérisée en ce que** les moyens de préhension (73, 74) des préformes sont portés par un premier support (72) monté en rotation sur la première extrémité du premier bras (70) et/ou les moyens de préhension des récipients (13) sont portés par un second support (89, 90, 91) monté en rotation sur la première extrémité du second bras (85, 86, 87).

14. Installation selon la revendication 13, **caractérisée en ce que** la seconde extrémité du premier bras (70) est montée sur un troisième support (75) tournant autour d'un axe (750) parallèle à celui du carrousel (4) portant les moules et/ou la seconde extrémité du second bras est montée sur un quatrième support (88) tournant autour d'un axe (880) parallèle à celui du carrousel portant les moules, et **en ce qu'**elle comporte des moyens pour que le premier (70) et/ou le second bras (85, 86, 87) effectuent des mouvements de rotation et de translation par rapport à leur support tournant respectif.

15. Installation selon la revendication 13, **caractérisée en ce que** les mouvements de rotation du premier support (72) des moyens de préhension des préformes (1) et/ou du second support (89, 90, 91) des moyens de préhension des récipients (13), à la première extrémité du premier et/ou du second bras, sont commandés par des moyens (79, 80; 890, 900, 910) solidaires de chaque support tournant (75, 88) respectif.

16. Installation selon l'une des revendications 14 ou 15, **caractérisée en ce que** les moyens pour que le premier et/ou le second bras effectuent des mouvements de rotation et de translation par rapport à leur support tournant respectif et/ou les moyens pour que le support de chaque moyen de préhension effectue des mouvements de rotation par rapport à son bras respectif sont constitués par des cames (76, 77, 881, 882)) portées par le support tournant respectif et agissant sur des organes complémentaires, tels que des galets et des biellettes (80, 890, 900, 910), solidaires du bras respectif.

17. Installation selon l'une des revendications 3 à 16, **caractérisée en ce qu'**elle comporte un dispositif de conditionnement thermique linéaire, avec une chaîne sans fin de supports (31) de préformes, tendue entre deux roues (99, 100), dans laquelle deux supports (31) successifs sont espacées d'un premier pas (P1), et **en ce que** la roue (51) comportant à sa périphérie les éléments mobiles (52) de maintien des préformes est disposée sous l'une des dites roues de tension, coaxialement à celle-ci, et est entraîné avec elle, et est agencée de façon à pouvoir être utilisée pour supporter les préformes pendant leur phase de vêtissage (102) et/ou supporter les préformes entre la phase de dévêtissage (105) et leur saisie par les premiers moyens de transfert.

18. Installation selon la revendication 17, **caractérisée en ce que** les moyens de changement de pas sont agencés pour que les éléments mobiles de maintien des préformes soient espacés du premier pas (P1) au moins dans les zones de vêtissage (102) et/ou de dévêtissage (105).

19. Installation selon l'une des revendications 4 à 16, **caractérisée en ce qu'**elle comporte un dispositif de conditionnement thermique circulaire, avec une chaîne sans fin de supports (31) de préformes, portée par un carrousel (106), dans laquelle deux supports de préformes successifs sont espacées d'un premier pas (P1), et **en ce que** les moyens (5A) de changement de pas, comportant la roue (51) avec ses éléments (52) mobiles à échancrures (53) et l'élément complémentaire (66) en portion de couronne, sont disposés à la périphérie du carrousel de façon à saisir et accompagner les préformes après leur dévêtissage (113), jusqu'à leur saisie par les premiers moyens de transfert (5B).

20. Installation selon la revendication 19, **caractérisée en ce qu'**au moins une roue (114) à encoches fixes (115) et un support (116) en forme de portion de couronne entourant partiellement ladite roue (114) sont intercalés entre le dispositif de conditionnement thermique et la roue (51), les préformes étant maintenues au premier pas (P1) sur la ou les roues (114) à encoches fixes.

## Patentansprüche

1. Anlage zur Herstellung von Behältern (13) durch Blasformen von zuvor spritzgegossenen Vorformlingen (1), die folgendes umfaßt:
- eine Vorrichtung (3) zum Antreiben und Halten der Vorformlinge auf einem Weg, entlang dem eine Wärmebehandlungsstation (32) angeordnet ist, mit Mitteln (31) zum Halten zweier aufeinanderfolgender Vorformlinge in einem ersten Abstand (P1) voneinander;
- mindestens zwei am Umfang eines Blasformumlaufsystems (4) angeordnete aufklappbare Werkzeuge (41, 42, 43, 44), die jeweils mindestens zwei Formhöhlungen (48A, 48B; 49A, 49B) umfassen und in denen die Längsachsen der beiden benachbarten Höhlungen in einem zweiten Abstand (P2) voneinander angeordnet sind;
- Mittel (5A) zur Änderung des Abstands der Vorformlinge, um sie vom ersten Abstand (P1) auf den zweiten Abstand (P2) zu bringen;
- erste Mittel (5B) zur Übertragung von mindestens zwei Vorformlingen, um sie auf den Abstandsänderungsmitteln zu sammeln, wenn sich die Vorformlinge im zweiten Abstand befinden, und sie in ein Werkzeug einzuführen;
- **dadurch gekennzeichnet, daß** die Abstandsänderungsmittel (5A) mindestens zwei benachbarte bewegliche Glieder (52) umfassen, die jeweils mit einem Element (53) zum Halten eines Vorformlings versehen und so angeordnet sind, daß sie die Haltemittel auf den ersten Abstand (P1) halten können, wenn diese gegenüber dem Antriebsmittel angeordnet sind, und auf den zweiten Abstand (P2) halten können, wenn sie gegenüber den Übertragungsmitteln angeordnet sind.

2. Anlage nach Anspruch 1, **dadurch gekennzeichnet, daß** der erste Abstand (P1) zwischen den Längsachsen zweier aufeinanderfolgender Vorformlinge in der Wärmebehandlungsvorrichtung kleiner ist als der Abstand (P2) zwischen den Längsachsen zweier benachbarter Höhlungen ein und desselben Werkzeugs.

3. Anlage nach Anspruch 2, **dadurch gekennzeichnet, daß** die Abstandsänderungsmittel (5A) ein Rad (51) aufweisen, das an seinem Umfang eine Folge von Elementen (53) zum Halten der Vorformlinge aufweist.

4. Anlage nach Anspruch 3, **dadurch gekennzeichnet, daß** die Halteelemente (53) Aussparungen sind und daß die Anlage am Umfang der Aussparungen ein zusätzliches Halteelement (66) aufweist, das durch einen kreisförmigen Ringteil gebildet wird, der gestattet, daß die Vorformlinge (1) vom Zeitpunkt der Entformung bis zum Zeitpunkt, zu dem die Vorformlinge durch die ersten Übertragungsmittel (5B) ergriffen werden, nach der Abstandsänderung an ihrem Kragen (11) zwischen den Aussparungen und diesem zusätzlichen Element getragen werden.

5. Anlage nach Anspruch 4, **dadurch gekennzeichnet, daß** die Aussparungen (53) gleichmäßig um den Umfang des Rads (51) verteilt sind.

6. Anlage nach Anspruch 4 oder 5, **dadurch gekennzeichnet, daß** die Aussparungen (53) in identischen Platten (52) ausgebildet sind, die drehbar an dem Rad angebracht sind, und daß sie Mittel (57, 62, 63) enthält, die so angeordnet sind, daß zu jedem Zeitpunkt die Stellung einer Platte bezüglich der benachbarten Platten und folglich die einer Aussparung bezüglich der Aussparungen der benachbarten Platten von der Stellung des Rads (51) bezüglich der Anlage abhängt.

7. Anlage nach Anspruch 6, **dadurch gekennzeichnet, daß** die Drehachsen (56) der Anordnung der Platten gleichmäßig über das Rad (51) verteilt sind und einen mit der Drehachse (57) dieses Rads (51) konzentrischen Kreis begrenzen.

8. Anlage nach Anspruch 6 oder 7, **dadurch gekennzeichnet, daß** jede Platte (52) einer entsprechenden Kurbel (57) zugeordnet ist, damit ihre Drehung bezüglich des Rads und somit die Abstandsänderung gewährleistet wird, wobei ein einer Platte zugeordnetes erstes Ende (60) der Kurbel mit der Drehachse (56) dieser Platte fest verbunden ist und ein zweites Ende (61) in einer mit dem Rahmen der Anlage fest verbundenen Führungskurve (62) in Eingriff steht.

9. Anlage nach Anspruch 8, **dadurch gekennzeichnet, daß** die Kurve (62) durch eine Nut gebildet wird, die eine geschlossene Schleife bildet, welche in der Dicke einer bezüglich der Anlage festgelegten Scheibe (63) ausgebildet ist; die Kurve Krümmungsradiusänderungen aufweist, so daß bei Drehantrieb des Rads (51) das zweite Ende (61) jeder Kurbel (57) den Krümmungsänderungen der in der festgelegten Scheibe ausgebildeten Kurve folgt und somit den Drehantrieb der dem Rad (51) zugeordneten Platte und somit eine Abstandsänderung dieser Platte zu ihren benachbarten gewährleistet und folglich eine Abstandsänderung zwischen den Aussparungen der betrachteten Platten gewährleistet.

10. Anlage nach einem der Ansprüche 1 bis 9, **dadurch gekennzeichnet, daß** die ersten Übertragungsmittel (5B) aus mindestens einem Arm (70) bestehen, von dem ein erstes Ende genauso viele Vorformlinggreifmittel, wie zum Beispiel Paare von Greifzangen (73, 74), trägt, wie ein Werkzeug Höhlungen aufweist, wobei der Abstand zwischen den Mitten von zwei aufeinanderfolgenden Greifmitteln ein und desselben Arms gleich dem Abstand (P2) zwischen den Längsachsen zweier aufeinanderfolgender Höhlungen ein und desselben Werkzeugs ist.

11. Anlage nach einem der Ansprüche 1 bis 10, **dadurch gekennzeichnet, daß** sie zweite Übertragungsmittel (5C) zur Entnahme der Behälter (13) aus den Werkzeugen umfaßt.

12. Anlage nach Anspruch 11, **dadurch gekennzeichnet, daß** die zweiten Übertragungsmittel (5C) aus mindestens einem zweiten Arm (85, 86, 87) bestehen, von dem ein erstes Ende genauso viele Greifmittel für Behälter (13), wie zum Beispiel Paare von Greifzangen, trägt, wie ein Werkzeug Höhlungen aufweist, wobei der Abstand zwischen den Mitten zweier aufeinanderfolgender Greifmittel gleich dem Abstand (P2) zwischen den Längsachsen zweier aufeinanderfolgender Höhlungen ein und desselben Werkzeugs ist.

13. Anlage nach Anspruch 11 oder 12, **dadurch gekennzeichnet, daß** die Greifmittel (73, 74) für die Vorformlinge von einer drehbar am ersten Ende des ersten Arms (70) angebrachten ersten Stütze (72) getragen werden und/oder die Greifmittel für die Behälter (13) von einer drehbar am ersten Ende des zweiten Arms (85, 86, 87) angebrachten zweiten Stütze (89, 90, 91) getragen werden.

14. Anlage nach Anspruch 13, **dadurch gekennzeichnet, daß** das zweite Ende des ersten Arms (70) an einer dritten Stütze (75) angebracht ist, die sich um eine Achse (750) dreht, die parallel zu der des die Werkzeuge tragenden Umlaufsystems (4) verläuft, und/oder das zweite Ende des zweiten Arms an einer vierten Stütze (88) angebracht ist, die sich um eine Achse (880) dreht, die parallel zu der des die Werkzeuge tragenden Umlaufsystems verläuft, und daß sie Mittel umfaßt, die es dem ersten (70) und/oder zweiten Arm (85, 86, 87) ermöglichen, Drehbewegungen und Translationsbewegungen bezüglich ihrer jeweiligen Drehstütze auszuführen.

15. Anlage nach Anspruch 13, **dadurch gekennzeichnet, daß** die Drehbewegungen der ersten Stütze (72) der Greifmittel für die Vorformlinge (1) und/oder der zweiten Stütze (89, 90, 91) der Greifmittel für die Behälter (13) am ersten Ende des ersten und/oder zweiten Arms durch fest mit jeder entsprechenden Drehstütze (75, 88) verbundene Mittel (79, 80; 890, 900, 910) gesteuert werden.

16. Anlage nach Anspruch 14 oder 15, **dadurch gekennzeichnet, daß** die Mittel, die gestatten, daß der erste und/oder zweite Arm Drehbewegungen und Translationsbewegungen bezüglich ihrer jeweiligen Drehstütze ausführen, und/oder die Mittel, die gestatten, daß die Stütze jedes Greifmittels Drehbewegungen bezüglich ihres jeweiligen Arms ausführt, durch Kurven (76, 77, 881, 882) gebildet werden, die von der jeweiligen Drehstütze getragen werden und auf zusätzliche Glieder, wie Rollen und Stangen (80, 890, 900, 910), die fest mit dem jeweiligen Arm verbunden sind, einwirken.

17. Anlage nach einem der Ansprüche 3 bis 16, **dadurch gekennzeichnet, daß** sie eine Linearwärmebehandlungsvorrichtung mit einer Endloskette von Stützen (31) für Vorformlinge aufweist, die zwischen zwei Rädern (99, 100) gespannt ist, wobei zwei aufeinanderfolgende Stützen (31) in einem ersten Abstand (P1) voneinander angeordnet sind, und daß das Rad (51), das an seinem Umfang bewegliche Elemente (52) zum Halten der Vorformlinge aufweist, unter einem der Spannräder und koaxial damit angeordnet ist und mit diesem angetrieben wird und so angeordnet ist, daß es zum Abstützen der Vorformlinge während ihrer Einbringphase (102) und/oder Abstützen der Vorformlinge zwischen der Entformungsphase (105) und ihrem Ergreifen durch die ersten Übertragungsmittel verwendet werden kann.

18. Anlage nach Anspruch 17, **dadurch gekennzeichnet, daß** die Abstandsänderungsmittel so angeordnet sind, daß die beweglichen Haltemittel für die Vorformlinge zumindest in den Einbringbereichen (102) und/oder Entformungsbereichen (105) im ersten Abstand (P1) voneinander beabstandet sind.

19. Anlage nach einem der Ansprüche 4 bis 16, **dadurch gekennzeichnet, daß** sie eine Kreiswärmebehandlungsvorrichtung mit einer Endloskette von Stützen (31) für Vorformlinge aufweist, die von einem Umlaufsystem (106) getragen wird, wobei zwei aufeinanderfolgende Vorformlingstützen in einem ersten Abstand (P1) voneinander angeordnet sind, und daß die Abstandsänderungsmittel (5A), die das Rad (51) mit seinen mit Aussparungen (53) ausgebildeten beweglichen Elementen (52) und das als Ringteil ausgebildete zusätzliche Element (66) enthalten, so am Umfang des Umlaufsystems angeordnet sind, daß sie die Vorformlinge nach ihrer Entformung (113) bis zu ihrem Ergreifen durch die ersten Übertragungsmittel (5B) ergreifen und sich zusammen mit ihnen bewegen.

20. Anlage nach Anspruch 19, **dadurch gekennzeichnet, daß** mindestens ein Rad (114) mit festgelegten Kerben (115) und eine als das Rad (114) teilweise umgebenden Ringteil ausgebildete Stütze (116) zwischen der Wärmebehandlungsvorrichtung und dem Rad (51) angeordnet sind, wobei die Vorformlinge an dem oder den die festgelegten Kerben aufweisenden Rädern (114) im ersten Abstand (P1) gehalten werden.

## Claims

1. Plant for producing containers (13) by blow-moulding previously injection-moulded parisons (1), comprising:
- a device (3) for driving and for holding the parisons in a path along which a thermal conditioning station (32) is arranged, with means (31) for keeping two successive parisons spaced apart by a first spacing (P1);
- at least two moulds (41, 42, 43, 44) arranged at the periphery of a blow-moulding carousel (4), in which the moulds are of the hinged type and each comprise at least two moulding cavities (48A, 48B; 49A, 49B) and in which the longitudinal axes of two adjacent cavities are spaced apart by a second spacing (P2);
- means (5A) for changing the spacing of the parisons to bring them from the first spacing (P1) to the second spacing (P2);
- first means (5B) of transferring at least two parisons so as to collect them from the spacing changing means when they are at the second spacing and introduce them into a mould;
- **characterized in that** the spacing changing means (5A) comprise at least two adjacent moving members (52), each equipped with a parison-holding element (53) and designed to be able to place the holding elements at the first spacing (P1) when these elements are facing the drive device, and at the second spacing (P2) when they are facing the transfer means.

2. Plant according to Claim 1, **characterized in that** the first spacing (P1) between the longitudinal axes of two successive parisons in the thermal conditioning device is less than the spacing (P2) between the longitudinal axes of two adjacent cavities of one and the same mould.

3. Plant according to Claim 2, **characterized in that** the spacing changing means (5A) comprise a wheel (51) which, at its periphery, has a succession of parison-holding elements (53).

4. Plant according to Claim 3, **characterized in that** the holding elements (53) are notches and **in that** it comprises, at the periphery of the notches, a complementary holding element (66) consisting of a portion of a circular annulus allowing the parisons (1) to be held, between the notches and this complementary element, by their collar (11), between the time of divestment and the time when the parisons are picked up by the first transfer means (5B) after the change in spacing.

5. Plant according to Claim 4, **characterized in that** the notches (53) are uniformly distributed at the periphery of the wheel (51).

6. Plant according to one of Claims 4 and 5, **characterized in that** the notches (53) are made in identical leaves (52) mounted in rotation on the wheel, and **in that** it comprises means (57, 62, 63) designed so that at any moment, the position of one leaf with respect to the adjacent leaves, and therefore the position of a notch with respect to the notches of the adjacent leaves, are a function of the position of the wheel (51) with respect to the plant.

7. Plant according to Claim 6, **characterized in that** the spindles (56) about which the set of leaves rotate are uniformly distributed on the wheel (51) and delimit a circle concentric with the axis (57) of rotation of this wheel (51).

8. Plant according to either of Claims 6 and 7, **characterized in that** each leaf (52) is associated with a respective crank (57) for rotating it with respect to the wheel and therefore changing the spacing, a first end (60) of the crank associated with a leaf being secured to the rotation spindle (56) of that leaf and a second end (61) being engaged in a guide cam (62) secured to the supporting structure of the plant.

9. Plant according to Claim 8, **characterized in that** the cam (62) consists of a groove forming a closed loop made in the thickness of a plate (63) which is stationary with respect to the plant; the cam has variations in its radius of curvature so that when the wheel (51) is driven in rotation, the second end (61) of each crank (57) follows the variations in curvature of the cam formed in the stationary plate, driving the associated leaf in rotation with respect to the wheel (52) and therefore causing a variation in the spacing of this leaf with respect to its neighbours and, in consequence, a change in the spacing between the notches of the leaves in question.

10. Plant according to one Claims 1 to 9, **characterized in that** the first transfer means (5B) consist of at least a first arm (70), a first end of which bears as many parison gripping means, such as pairs of grippers (73, 74), as a mould has cavities, the spacing between the centres of two successive gripping means of one and the same arm being identical to the spacing (P2) between the longitudinal axes of two successive cavities of one and the same mould.

11. Plant according to one of Claims 1 to 10, **characterized in that** it comprises second transfer means (5C) for unloading the containers (13) from the moulds.

12. Plant according to Claim 11, **characterized in that** the second transfer means (5C) consist of at least one second arm (85, 86, 87), a first end of which bears as many container gripping means (13), such as pairs of grippers, as a mould has cavities, the spacing between the centres of two successive gripping means being identical to the spacing (P2) between the longitudinal axes of two successive cavities of one and the same mould.

13. Plant according to one of Claims 11 and 12, **characterized in that** the parison gripping means (73, 74) are carried by a first support (72) mounted in rotation on the first end of the first arm (70) and/or the container gripping means (13) are carried by a second support (89, 90, 91) mounted in rotation on the first end of the second arm (85, 86, 87).

14. Plant according to Claim 13, **characterized in that** the second end of the first arm (70) is mounted on a third support (75) rotating about an axis (750) parallel to that of the carousel (4) carrying the moulds and/or the second end of the second arm is mounted on a fourth support (88) rotating about an axis (880) parallel to that of the carousel carrying the moulds, and **in that** it comprises means so that the first (70) and/or the second arm (85, 86, 87) performs movements of rotation and of translation with respect to their respective rotary support.

15. Plant according to Claim 13, **characterized in that** the rotational movements of the first support (72) of the parison gripping means (1) and/or of the second support (89, 90, 91) of the container gripping means (13), at the first end of the first and/or of the second arm, are controlled by means (79, 80; 890, 900, 910) secured to each respective rotary support (75, 88).

16. Plant according to one of Claims 14 and 15, **characterized in that** the means so that the first and/or the second arm perform movements of rotation and of translation with respect to their respective rotary support and/or the means so that the support of each gripping means performs movements of rotation with respect to its respective arm consist of cams (76, 77, 881, 882) carried by the respective rotary support and acting on complementary members such as followers and link rods (80, 890, 900, 910) secured to the respective arm.

17. Plant according to one of Claims 3 to 16, **characterized in that** it comprises a linear thermal conditioning device with an endless chain of parison supports (31) which is stretched between two wheels (99, 100), in which two successive supports (31) are spaced apart by a first spacing (P1), and **in that** the wheel (51), which at its periphery has the moving elements (52) for holding the parisons, is arranged under one of the said tension wheels, coaxially therewith, and is driven with it, and is arranged in such a way as to be able to be used to support the parisons during their investment phase (102) and/or to support the parisons between the divestment phase (105) and their being picked up by the first transfer means.

18. Plant according to Claim 17, **characterized in that** the spacing changing means are designed so that the moving elements for holding the parisons are spaced apart by the first spacing (P1) at least in the investment zone (102) and/or divestment zone (105).

19. Plant according to one of Claims 4 to 16, **characterized in that** it comprises a circular thermal conditioning device with an endless chain of parison supports (31), which is carried by a carousel (106), in which two successive parison supports are spaced apart by a first spacing (P1) and **in that** the spacing changing means (5A), comprising the wheel (51) with its moving elements (52) with notches (53) and the complementary annulus-portion element (66), are arranged at the periphery of the carousel so as to pick up the parisons and accompany them after their divestment (113) until such time as they are picked up by the first transfer means (5B).

20. Plant according to Claim 19, **characterized in that** at least one wheel (114) with fixed notches (115) and one support (116) in the form of a portion of an annulus partially surrounding the said wheel (114) are interposed between the thermal conditioning device and the wheel (51), the parisons being kept at the first spacing (P1) on the wheel or wheels (114) with fixed notches.
